# EUROPEAN PATENT APPLICATION

(11) **EP 2 273 354 A1**
(43) Date of publication of application: **12.01.2011**
(21) Application number: 10168767.1
(22) Date of filing: 07.07.2010
(51) Int. Cl.: G06F 3/041, B32B 3/14, B32B 7/02, B32B 7/12, B32B 7/14

(54) **Conductive plate and touch panel including the same**

(30) Priority: 08.07.2009 CN 200910304132
(71) Applicant: Chimei InnoLux Corporation, Chu-Nan 350, Taipei (TW)
(72) Inventor: Shih, Po-Sheng, 350, Chu-Nan (TW); Hu, Chun-Yi, 350, Chu-Nan (TW); Wu, Jeah-Sheng, 350, Chu-Nan (TW); Chao, Chih-Han, 350, Chu-Nan (TW)
(74) Representative: Gray, John James

(57) **Abstract**

A conductive plate (600,200) includes a substrate (610,710) and a patterned conductive film (630,730) bonded to the substrate through an adhesive layer (620,720). The patterned conductive film includes a pattern of conductive traces (300). A touch panel includes first and second conductive plates (600,700), each of which includes a substrate and a patterned conductive film bonded to the substrate through an adhesive layer. The patterned conductive film includes a pattern of conductive traces (300).

## Description

### BACKGROUND OF THE DISCLOSURE

### 1. Field of the Disclosure

The present disclosure relates to a conductive plate and a touch panel including the same, and more particularly to a conductive plate including a patterned conductive film bonded to a substrate through an adhesive layer.

### 2. Description of Related Art

Touch panels are commonly used in electronic devices, such as Global Positioning Systems (GPSs), personal digital assistants (PDAs), cellular phones, and hand-held personal computers, and include two overlapped conductive plates. Conventional conductive plates normally include a transparent substrate and a transparent conductive film coated on the substrate. The substrate can be made from glass or a plastic material. The conductive film can be made from indium tin oxide (ITO), tin oxide, or zinc oxide. Among them, ITO exhibits the best transparency and excellent conductivity. However, the ITO film formed on the substrate tends to be deformed and damaged when the substrate is bent. In addition, formation of the ITO film on the substrate is complicated and the control of forming a uniform ITO film is difficult to achieve. Moreover, indium is harmful to the environment and shortage of indium raw material will be getting worse in the future, which can result in an increase in the manufacturing costs of the conductive plate.

### SUMMARY OF THE DISCLOSURE

Other objects and advantages of the present disclosure can be further illustrated by the technical features broadly embodied and described as follows.

According to one aspect of the present disclosure, there is provided a conductive plate that comprises a substrate and a patterned conductive film bonded to the substrate through an adhesive layer. The conductive film has a pattern of conductive traces.

According to another aspect of the present disclosure, there is provided a touch panel that comprises a first conductive plate and a second conductive plate juxtaposed with the first conductive plate in a face-to-face manner. The first conductive plate includes a first substrate and a patterned first conductive film bonded to the first substrate through a first adhesive layer. The patterned first conductive film includes a pattern of first conductive traces. The second conductive plate includes a second substrate and a patterned second conductive film bonded to the second substrate through a second adhesive layer. The patterned second conductive film includes a pattern of second conductive traces.

Other objects and advantages of the disclosure can be further illustrated by the technical features broadly embodied and described as follows.

### BRIEF DESCRIPTION OF THE DRAWINGS

The components in the drawings are not necessarily drawn to scale, the emphasis instead being placed upon clearly illustrating the principles of at least one embodiment. In the drawings, like reference numerals designate corresponding parts throughout the various views.

FIG. 1 is a top view of the first exemplary embodiment of a conductive plate of the present disclosure, with conducting lines removed for better illustration.

FIG. 2 is a sectional view of the first exemplary embodiment taken along line II-II of FIG. 1.

FIG. 3 is a top view of the first exemplary embodiment.

FIG. 4 is a sectional view of the first exemplary embodiment taken along line IV-IV of FIG. 3.

FIG. 5 is a top view of the second exemplary embodiment of a conductive plate of the present disclosure, with conducting lines removed for better illustration.

FIG. 6 is a sectional view of the second exemplary embodiment taken along line VI-VI of FIG. 5.

FIG. 7 is a top view of the second exemplary embodiment.

FIG. 8 is a sectional view of the second exemplary embodiment taken along line VIII-VIII of FIG. 7.

FIG. 9 is a side view of the first exemplary embodiment of a touch panel of the present disclosure.

FIG. 10 is a side view of the second exemplary embodiment of a touch panel of the present disclosure.

### DESCRIPTION OF EMBODIMENTS

Reference will now be made to the drawings to describe various embodiments in detail.

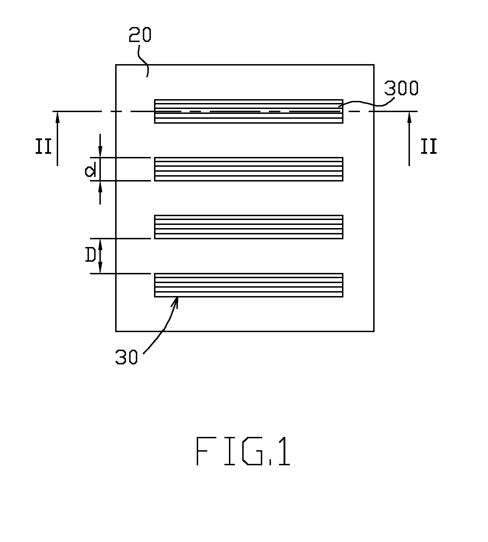

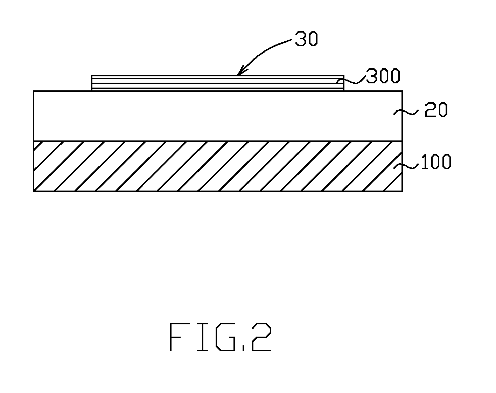

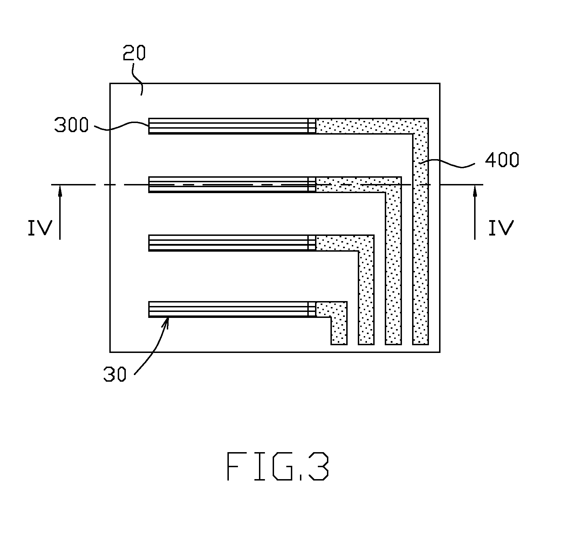

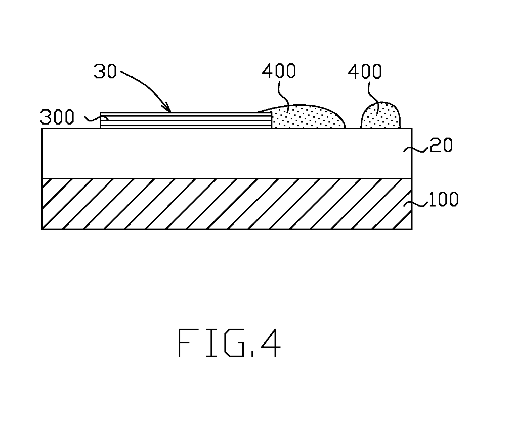

Referring to FIGS. 3 and 4, in combination with FIGS. 1 and 2, the first exemplary embodiment of a conductive plate of the present disclosure for a touch panel includes a substrate 100, a patterned conductive film 30 bonded to the substrate 100 through an adhesive layer 20, and a plurality of conductive connecting lines 400 bonded to the substrate 100 through the adhesive layer 20. The patterned conductive film 30 includes a pattern of conductive traces 300 that are spaced apart from each other and that are bonded to the conductive connecting lines 400, respectively.

The substrate 100 can be a transparent substrate or an opaque substrate. Examples of the transparent substrate include glass board, polymethylmethacrylate (PMMA) board, polyethylene terephthalate (PET) board, and polycarbonate (PC) board. Examples of the opaque substrate include metal plates, semiconductor boards, printed circuit boards, and plastic boards. The plastic boards can be made from a colored plastic material or coated with a colored coating.

The adhesive layer 20 can be applied to the substrate 100 through printing, spin coating or liquid drop coating techniques. The adhesive layer 20 can be selected from the group consisting of a light curable adhesive layer (such as an ultraviolet glue), a heat curable adhesive layer (which is cured at an elevated temperature), and a light-heat curable adhesive layer (which is cured at an elevated temperature under a ultraviolet light). In addition, the adhesive layer 20 can be made from a conductive polymer.

The conductive film 30 exhibits electric anisotropy, which is a property having different conductivities or resistivities in different directions. For example, the conductive film 30 is formed by stretching a conductive nanomaterial along a predetermined direction so as to exhibit electric anisotropy. Examples of the nanomaterial are nanotubes and nano-particles. An example of the nanomaterial includes strings of interconnected nanounits extending in a predetermined direction along which the nanomaterial is stretched. The nanounits may be carbon nanotubes, carbon nanotube bundles, or conductive nanoparticles exhibiting electric anisotropy.

The patterning of the conductive film 30 to form the conductive traces 300 can be performed by emboss transferring, wet etching, dry etching, laser patterning, scraping, or adhesive tape removing techniques. The scraping techniques involves removing undesired portions of the conductive film 30 from the adhesive layer 20 by scraping through the use of a tool so as to form the conductive traces 300 on the adhesive layer 20. The adhesive tape removing techniques involves attaching an adhesive tape to undesired portions of the conductive film 30 to be removed, followed by removing the adhesive tape together with the undesired portions of the conductive film 30 so as to form the conductive traces 300. The laser patterning techniques involves radiating a laser light onto undesired portions of the conductive film 30 to be removed, followed by removing the irradiated portions of the conductive film 30 so as to form the conductive traces 300. Dry or wet etching involves forming a patterned photoresist on the conductive film 30 through photolithographic techniques, followed by etching with a plasma gas or a liquid etchant to remove the undesired portions of the conductive film 30 so as to form the conductive traces 300. The emboss transferring techniques involves transferring an insulator on a mold having a pattern of protrusions onto the undesired portions of the conductive film 30 so as to form the conductive traces 300. In addition, the conductive film 30 can be patterned prior to attachment to the adhesive layer 20, followed by attaching or transferring the patterned conductive film 30 to the adhesive layer 20.

In this exemplary embodiment, the adhesive layer 20 is not patterned.

Each of the conductive connecting lines 400 extends along a surface of the adhesive layer 20, and has one end connected to an end of the respective one of the conductive traces 300, and the other end disposed on an edge of the adhesive layer 20 for connecting the respective conductive trace 300 to a circuit (not shown). The conductive connecting lines 400 can be made from a material including conductive pastes, conductive wires, metal lines, etc.

In this exemplary embodiment, the pattern of the conductive traces 300 is in the form of parallel lines, and has a distance (D) between adjacent said conductive traces ranging from about 1 to about 1000 microns, and a line width (d) ranging from about 1 to about 1000 microns.

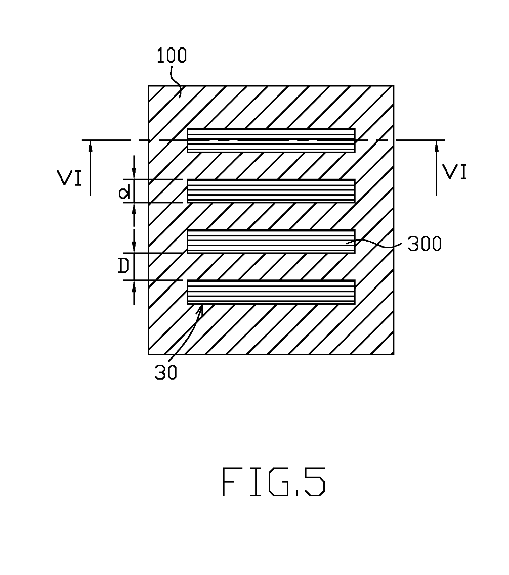

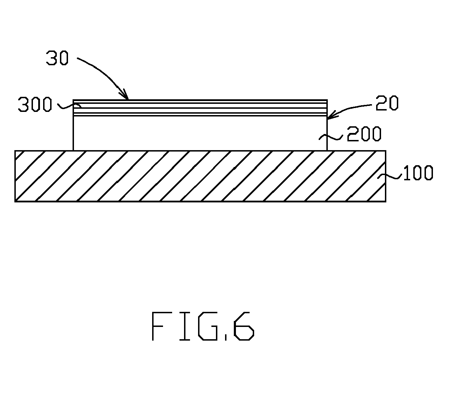

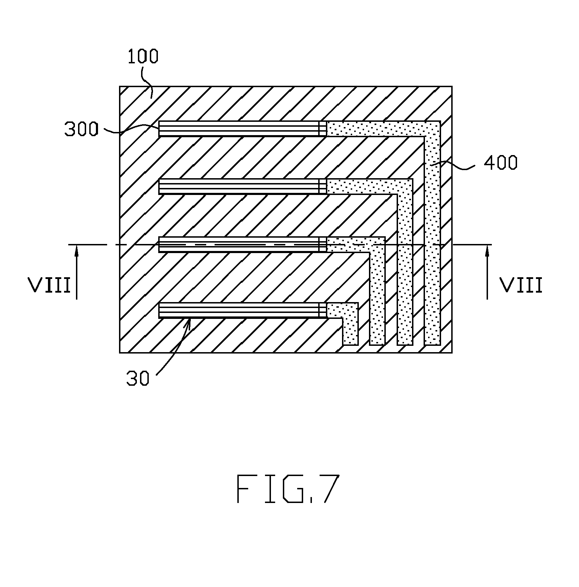

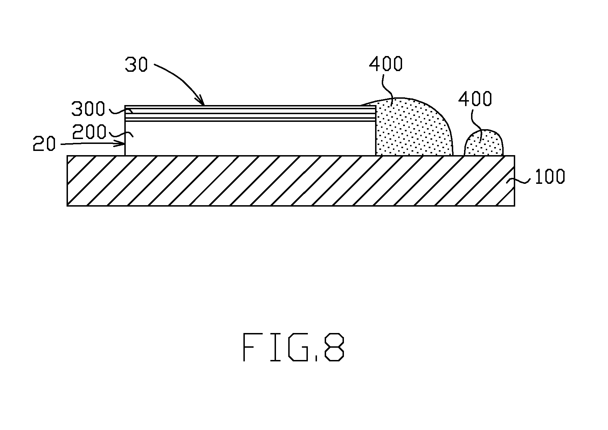

FIGS. 7 and 8, in combination with FIGS. 5 and 6, illustrate the second exemplary embodiment of the conductive plate of the present disclosure. The second exemplary embodiment differs from the previous exemplary embodiment in that the adhesive layer 20 is patterned to form into a pattern of adhesive traces 200 spaced apart from each other.

The patterning of the adhesive layer 20 can be conducted by one of the emboss transferring, wet etching, dry etching, laser patterning, scraping, or adhesive layer tape removing techniques.

In this exemplary embodiment, the adhesive layer 20 is first patterned to form into the pattern of the adhesive traces 200, followed by attaching a non-patterned conductive film 30 to the patterned adhesive traces 200 and subsequently removing undesired portions of the conductive film 30 that are not bonded to the adhesive traces 200, thereby forming a patterned conductive film 30 that has a pattern of conductive traces 300 the same as that of the adhesive traces 200. Removal of the undesired portions of the conductive film 30 can be performed by peeling or cutting methods.

Comparing to the previous exemplary embodiment, each of the conductive connecting lines 400 of this exemplary embodiment extends along the surface of the substrate 100 instead.

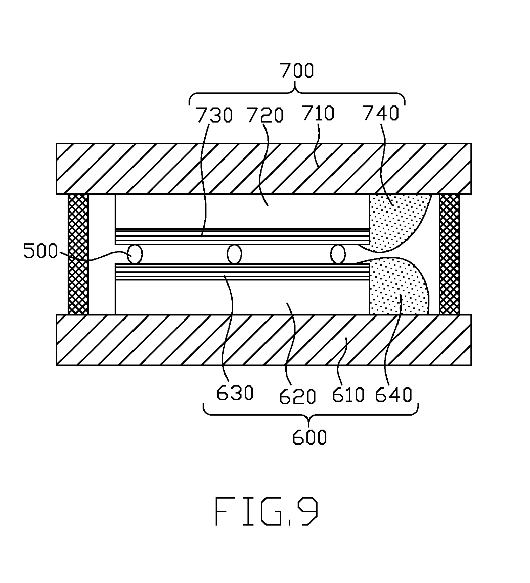

Referring to FIG. 9, the first exemplary embodiment of a touch panel of the present disclosure includes first and second conductive plates 600, 700 that are juxtaposed with each other in a face-to-face manner, and a plurality of spacers 500 sandwiched between the first and second conductive plates 600, 700 to space them apart. Each of the first and second conductive plates 600, 700 has a structure similar to that of the conductive plate of FIG. 8. The first conductive plate 600 includes a first substrate 610, a patterned adhesive layer 620, a patterned first conductive film 630, and a plurality of conductive connecting lines 640. The second conductive plate 700 includes a second substrate 710, a patterned adhesive layer 720, a patterned second conductive film 730, and a plurality of conductive connecting lines 740. The first and second conductive films 630, 730 are separated from each other by the spacers 500.

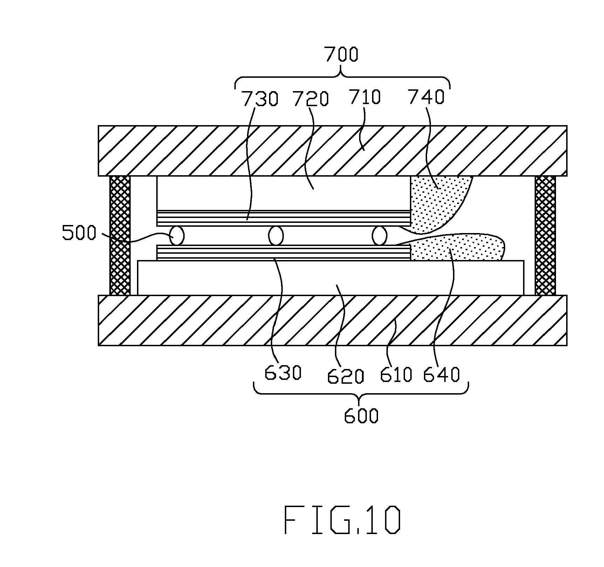

FIG. 10 illustrates the second exemplary embodiment of a touch panel of the present disclosure. The touch panel of the second exemplary embodiment differs from the previous exemplary embodiment in that the first conductive plate 600 has a structure similar to that of the conductive plate of Fig. 4 (the first exemplary) and that the second conductive plate 700 has a structure similar to that of the conductive plate of FIG. 8 (the second exemplary).

In operation, when the second conductive plate 700 of the touch panel of the present disclosure is depressed, the second conductive plate 700 is brought into contact with the first conductive plate 600 at the pressed spot of the second conducted plate 700, which turns on a circuit and generates a voltage potential drop that is detected by a scanner (not shown) and that is used to calculate the coordinate of the pressed spot for generating a control signal to for performing a desired function.

In summary, by forming a patterned conductive film and attaching it to a substrate through an adhesive layer which is patterned or non-patterned, the manufacturing costs of the conductive plate can be reduced.

It is to be understood that even though numerous characteristics and advantages of the present embodiments have been set forth in the foregoing description, together with details of the structures and functions of the embodiments, the disclosure is illustrative only; and that changes may be made in detail, especially in matters of shape, size, and arrangement of parts, within the principles of the embodiments, to the full extent indicated by the broad general meaning of the terms in which the appended claims are expressed.

## Claims

1. A conductive plate, comprising:
a substrate; and
a patterned conductive film;
wherein the patterned conductive film is bonded to said substrate through an adhesive layer.

2. The conductive plate of claim 1, wherein said patterned conductive film exhibits electric anisotropy.

3. The conductive plate of claim 1 or 2, wherein said patterned conductive film is made from a nanomaterial including strings of interconnected nanounits extending in a predetermined direction.

4. The conductive plate of claim 3, wherein said nanounits are carbon nanotube bundles.

5. The conductive plate of claim 1, 2, 3 or 4, wherein said adhesive layer is patterned and has a pattern the same as that of said patterned conductive film.

6. The conductive plate of any preceding claim, wherein said conductive film has a pattern of conductive traces.

7. The conductive plate of claim 6, wherein said conductive traces have a distance between adjacent said conductive traces ranging from about 1 to about 1000 microns.

8. The conductive plate of claim 6 or 7, wherein said conductive traces have a line width ranging from about 1 to about 1000 microns.

9. The conductive plate of any preceding claim, further comprising a plurality of conductive connecting lines bonded to said conductive traces respectively.

10. The conductive plate of claim 8, wherein each of said conductive connecting lines extends from the respective one of said conductive traces along a surface of one of said substrate and said adhesive layer.

11. A touch panel, comprising:
a first conductive plate, including:
a first substrate; and
a patterned first conductive film;
a second conductive plate juxtaposed with said first conductive plate in a face-to-face manner, and including:
a second substrate; and
a patterned second conductive film;
wherein the patterned first conductive film is bonded to said first substrate through a first adhesive layer, the patterned second conductive film is bonded to said second substrate through a second adhesive layer.

12. The touch panel of claim 11, wherein at least one of said patterned first conductive film and said patterned second conductive film exhibits electric anisotropy.

13. The touch panel of claim 11 or 12, wherein at least one of said patterned first conductive film and said patterned second conductive films is made from a nanomaterial including strings of interconnected nanounits extending in a predetermined direction.

14. The touch panel of claim 13, wherein said nanounits are carbon nanotube bundles.

15. The touch panel of claim 11, 12, 13 or 14, wherein at least one of said first adhesive layer and said second adhesive layer is patterned and has a pattern the same as that of a respective one of said patterned first conductive film and said patterned second conductive film.

16. The touch panel of any of claims 11 to 15, wherein said patterned first conductive film including a pattern of first conductive traces, and said patterned second conductive film including a pattern of second conductive traces.

17. The touch panel of claim 16, further comprising a plurality of first conductive connecting lines bonded to said first conductive traces, respectively, and a plurality of second conductive connecting lines bonded to said second conductive traces, respectively.

18. The touch panel of claim 17, wherein each of said first conductive connecting lines extends from the respective one of said first conductive traces along a surface of one of said first substrate and said first adhesive layer, each of said second conductive connecting lines extends from the respective one of said second conductive traces along a surface of one of said second substrate and said second adhesive layer.

19. The touch panel of any of claims 11 to 18, wherein said first adhesive layer is patterned and has a pattern the same as that of said patterned first conductive film.

20. The touch panel of claim 19, wherein said second adhesive layer is patterned and has a pattern the same as that of said patterned second conductive film.
